# EUROPEAN PATENT APPLICATION

(11) **EP 1 162 729 A2**
(43) Date of publication of application: **12.12.2001**
(21) Application number: 01112791.7
(22) Date of filing: 28.05.2001
(51) Int. Cl.: H03D 3/00

(54) **Circuit and method for signal phase control in a radio transceiver**

(30) Priority: 07.06.2000 GB 0013821
(71) Applicant: Motorola Israel Ltd., 67899 Tel Aviv (IL)
(72) Inventor: Dellon, Jon, Moshave, Magshimim, Israel 56910 (IL); Shirazi, Gadi, Ramat-Gan 52416, Israel 56910 (IL); Friedlander, Haim, Rehovot, Israel 76285 (IL)
(74) Representative: McCormack, Derek James

(57) **Abstract**

A circuit for use in a radio transceiver (100), the circuit comprising modulator means (114) for receiving digital signals (I_{T},Q_{T}) for application in combination to control the phase of a carrier to produce a transmission signal for transmission by the transceiver during a transmission mode; demodulator means (126) for demodulating a received signal during a reception mode to recover from the received signal digital signals (I_{R},Q_{R}) representing components of the phase thereof; wherein the demodulator means is coupled to the modulator means to receive therefrom in operation during the reception mode a reference signal indicating the phase of the transmission signal whereby there can be recognised from the received signal which is demodulated the phase applied in the transmission mode thereby to facilitate separation of signal from noise. A transceiver incorporating the circuit may be used in a method of inspecting or authenticating a surface of interest which comprises irradiating the surface with a radio signal which is obtained from the transmission signal of the transceiver and analysing a returned signal from the surface as the received signal received by the transceiver.

## Description

### Field of the Invention

This invention relates to a circuit and method for signal phase control in a radio transceiver especially a transceiver including a modulator for receiving a signal for application as a modulation of a carrier to produce a transmission signal for transmission by the transceiver during a transmission mode; and a demodulator for demodulating a received signal comprising a modulated carrier received during a reception mode to recover from the received signal a signal represented by the modulation thereof.

### Background of the Invention

In a particular application of r.f. transceivers, the transceiver is used as a r.f. probe in a near field excitation procedure to irradiate a surface of interest and to recover a received signal from the same surface. The received signal is characteristic of a material provided on the surface and is analysed to give an identification or authentication of the surface. This method is described for example in US-A-5,986,550. The surface may for example be marked with a material giving a characteristic strong absorption resonance and/or a reemission of radiation when suitable r.f. radiation is incident thereon.

The r.f. radiation employed in the method described is likely to be low power, e.g. less than 100mw, and the received signal is likely to be covered in noise which makes retrieval of the information contained by the received signal very difficult. Heretofore, use of modulation of the transmitted r.f. signal as suggested in US-A-5,986,550 and recovery of information from the modulation of the received signal has been very difficult and, using commercially available existing integrated circuits, has been possible only by use in the receiver circuitry of significant additional hardware such as additional synthesizers, additional modulators, or additional firmware implementations. Such additional components are very costly and add complexity to the manufacture of the transceiver.

It is an object of the present invention to provide a circuit and method for use in a transceiver for use in the application described wherein the abovementioned disadvantage(s) may be alleviated.

### Summary of the Invention

In accordance with a first aspect of the invention there is provided a circuit for use in a radio transceiver , the circuit comprising modulator means for receiving digital signals for application in combination to control the phase of a carrier to produce a transmission signal for transmission by the transceiver during a transmission mode; demodulator means for demodulating a received signal during a reception mode to recover from the received signal digital signals representing components of the phase thereof; wherein the demodulator means is coupled to the modulator means to receive therefrom in operation during the reception mode a reference signal indicating the phase of the transmission signal whereby there can be recognised from the received signal which is demodulated the phase applied in the transmission mode thereby to facilitate separation of signal from noise.

The invention beneficially provides a solution to the problems described earlier which can be implemented in a simple manner without the undesirable use of additional expensive components. The invention allows satisfactory extraction of signal from noise in the described surface identification application even though the power level of the transmitted r.f. may be very low, e.g. less than 100mw.

The circuit according to the invention may operate so that the modulation of the transmission signal and of the received signal has a phase which is selected for optimum performance and is obtained from a suitable combination of individual in-phase and quadrature-phase modulation signals applied to the carrier. The modulation signals may themselves be digital values. The digital values represented by the individual modulation signals may be a set of 2ⁿ values, where n is an integer which is at least 1. The modulations may be applied in the manner described in the specification of a copending patent application by the present applicants.

The circuit according to the invention may be such that in operation the received signal provided to the demodulator means comprises an echo or re-transmission of the transmission signal produced following incidence on a surface of interest giving a characteristic response to the transmission signal, e.g. to provide identification or authentication of the surface.

The circuit according to the invention may conveniently further comprise a digital signal processor coupled to the demodulator means which in operation receives from the demodulator means a signal recovered by the demodulator means from the received signal. The digital signal processor may beneficially be operable to apply a recognition algorithm to the output signal from the demodulator means to indicate that the received signal is a characteristic signal derived from the transmission signal. The recognition algorithm applied by the digital signal processor may for example provide an authentication that the received signal is from a reflecting surface of interest, e.g. to identify or authenticate a product as a genuine one and not a counterfeit by reflecting from a designated surface of the product. The signal after demodulation representing phase modulation of the received signal helps in this identification or authentication procedure

The circuit according to the invention may be such that the demodulator means operates in a direct or homodyne mode using the reference signal derived from the transmission signal as its local oscillator signal.

Alternatively, the demodulator means may operate in a heterodyne mode and the circuit may in that case further include a mixer means coupled to receive the received signal and coupled to receive a signal representative of the transmission signal and to provide an output signal which is deliverable to the demodulator means. The circuit may further include a frequency divider to which an output from the modulator means is applied, wherein the signal representative of the transmission signal is frequency divided from that signal. The divider can provide the signal representative of the modulated carrier transmission signal to have suitably a frequency which is substantially half that of the modulated carrier transmission signal.

According to the present invention in a second aspect there is provided a radio transceiver incorporating the circuit according to the first aspect of the invention. The transceiver may further include a pulse generator or switch for transmitting the transmission signal as pulses according to a predefined pulse sequence. The transceiver may include an antenna and a switch which is operable to couple the antenna to a transmit circuit including the modulator means during the transmission mode and to couple the antenna to a receive circuit including the demodulator means during the reception mode.

According to the present invention in a third aspect there is provided a method of inspecting or authenticating a surface of interest which comprises irradiating the surface with a radio signal which is obtained from the transmission signal produced by the transceiver according to the second aspect acting as a near field r.f. probe and analysing an echo signal from the surface as the received signal received by the transceiver.

Embodiments of the present invention will now be described by way of example with reference to the accompanying drawings, in which:

### Brief description of the accompanying drawings

FIGURE 1 is a block-schematic circuit diagram of a heterodyne radio transceiver embodying the invention; and
FIGURE 2 is a block-schematic circuit diagram of a homodyne radio transceiver embodying the invention.

### Detailed description of embodiments of the invention

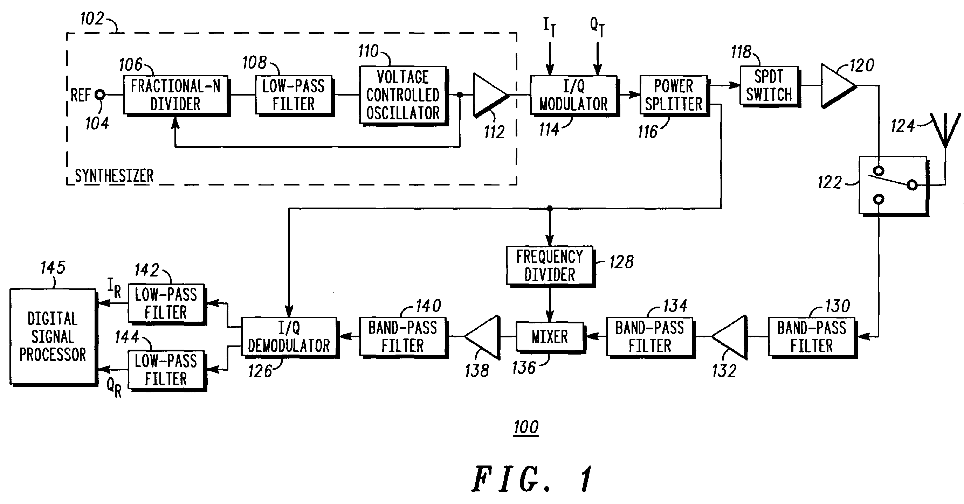

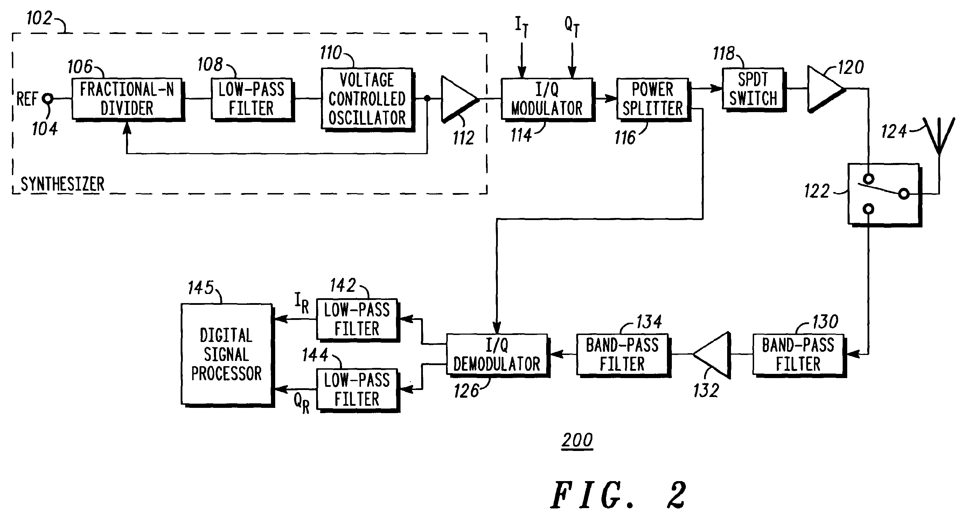

Alternative radio transceivers 100, 200 embodying the present invention are shown in Figure 1 and Figure 2 respectively. Such transceivers are intended for use in a procedure for investigation or authentication of a surface of interest. The procedure requires the transmission of two pulses of 1µs duration of different phase modulations 1µs apart and then repeating after 100µs. The pulses are transmitted onto material that responds with a signal (echo) 600KHz less than the transmitted frequency. The echo is received 4µs after the second pulse is transmitted. In practice, the echo may be almost completely covered by noise. By using a combination of different phases in the transmitted signal and by recognition of these phases in the received signal in accordance with the invention, this additive noise can be substantially removed.

Referring now to FIG. 1, the heterodyne radio transceiver 100 includes a synthesizer 102, in which a reference signal from a reference signal generator 104 is divided in a fractional-N divider 106 whose output signal is passed through a low pass filter 108 to control a voltage controlled oscillator (VCO) 110. The output of the VCO 110 is applied through a buffer 112 to produce the synthesizer output. The VCO output is also fed back to the fractional-N divider 106. The synthesizer output is applied to an I/Q modulator 114, which receives I and Q (i.e., in-phase and quadrature-phase respectively) signal inputs (I_{T} and Q_{T} respectively). The output of the I/Q modulator 114 is applied to a power splitter 116, one of whose outputs is applied to an SPDT switch 118. The output from the switch 118 is applied to an RF power amplifier 120, whose output is applied (via a transmit/receive switch 122) to an antenna 124 for transmission.

Another output of the power splitter 116 is applied to an I/Q demodulator 126 and to a frequency divider 128.

For reception, the antenna 124 is connected (via the transmit/receive switch 122) through a band-pass filter 130, a low noise amplifier 132 and a band-pass filter 134 to one input of a mixer 136. Another input of the mixer 136 is connected to receive the output of the frequency divider 128. The output of the mixer 136 is applied through a low noise amplifier 138 and a band-pass filter 140 to an input of the I/Q demodulator 126. The demodulator 126 produces two outputs, which are applied through respective low-pass filters 142 and 144 to produce recovered I and Q received signals I_{R} and Q_{R} respectively which are applied to a digital signal processor 145.

In use of the transceiver 100, the I/Q modulator 114 receives a signal from the synthesizer 102. The I_{T} and Q_{T} input signals to the I/Q modulator 114 are provided by the logic section (not shown) of the transceiver. The I/Q modulated signal (having a carrier frequency f₀) from the modulator 114 enters the power splitter 116, where the signal is split into the signal that is passed on to the SPDT switch 118 which is used to create pulses for transmission, and to provide a reference and local oscillator signal for reception. The pulses from the SPDT switch 118 enter the RF power amplifier 120, from which they are transmitted out (through the transmit/receive switch 122) at the antenna 124.

The receiver signal split from the splitter 116 is further split to provide (via the frequency divider 128) a local oscillator signal for the mixer 136, which has a frequency f₀/2 (i.e., half that of the signal from the splitter 116) for down-conversion of the RF signal in the receiver section.

A received signal enters the radio transceiver 100 through the antenna 124 and is routed by way of the transmit/receive switch 122 to the receiver section of the transceiver. The received signal is band limited by the band-pass filter 130 and amplified by the low noise amplifier 132. The signal is then filtered again by the band-pass filter 134, and applied to the mixer 136, where it is down-converted to a frequency of f₀/2 (i.e., one half of the received frequency). From the mixer 136, the processed received signal is then amplified further by the low noise amplifier 138 (in order to provide extra amplification to the signal level which may be extremely small), and filtered by the band-pass filter 140, before being applied to the I/Q demodulator 126. The reference and local oscillator signal for the I/Q demodulator 126 is provided by the output of the I/Q modulator 114 via the power splitter 116. Therefore any change to the phase in the I/Q modulator 114, by way of the original I and Q lines of the I/Q modulator, will appear in the reference and local oscillator signal of the I/Q demodulator 126.

The I and Q demodulated outputs of the I/Q demodulator 126 are low-pass filtered by the respective low-pass filters 142 and 144 to produce recovered I and Q received digital signals I_{R} and Q_{R}, which are passed to the digital signal processor 145.

The digital signal processor 145 applies an algorithm to the digital signal derived from the received and reference signals to provide recognition that the received signal has a phase corresponding to that of the transmission signal as transmitted. In other words, the phase of the transmission signal is employed to create a reference which can be used by the digital signal processor 145 for recognition in the received signal to allow the received signal to be separated from noise.

It will be understood that, if desired, the principle of the circuit and method described above in the heterodyne transceiver 100 can be implemented in a homodyne or direct conversion radio transceiver as shown in FIGURE 2. The overall configuration of the homodyne transceiver 200 is very similar to that of the heterodyne transceiver 100, and like components are given the same reference numerals. However, it is to be noted that in the homodyne transceiver 200, the following components of FIG. 1 are absent: the frequency divider 128, the mixer 136, the low noise amplifier 140 and the band-pass filter 140. In the homodyne transceiver 200, the received signal is applied from the band-pass filter 134 directly to the I/Q demodulator 126, and the signal from the power splitter 116 is applied directly to I/Q demodulator 126.

It will be appreciated that in the homodyne transceiver 200, as in the heterodyne transceiver 100, any change to the phase in the I/Q modulator 114, by way of the original I and Q lines of the I/Q modulator, will appear in the reference/local oscillator signal of the I/Q demodulator 126. The reference digital signals provided at the output of the I/Q demodulator 126 will therefore be determined by the signals I_{T} and Q_{T} on the I and Q lines of the I/Q modulator 114.The outputs of the demodulator 126 of Figure 2 which are digital signals derived from the received signal and from the reference signal are applied to and processed by the digital signal processor (not shown in Figure 2) in the manner described earlier with reference to Figure 1.

A radio transceiver utilizing the approach described for the transceivers 100, 200 as described may beneficially use existing integrated circuits (for, for example, the synthesizer 102, the I/Q modulator 114 and the I/Q demodulator 126) without any additional synthesizers, firmware, or additional high-cost hardware.

## Claims

1. A circuit for use in a radio transceiver (100), the circuit comprising modulator means (114) for receiving digital signals (I_{T}, Q_{T}) for application in combination to control the phase of a carrier to produce a transmission signal for transmission by the transceiver during a transmission mode; demodulator means (126) for demodulating a received signal during a reception mode to recover from the received signal digital signals (I_{R},Q_{R}) representing components of the phase thereof; wherein the demodulator means is coupled to the modulator means to receive therefrom in operation during the reception mode a reference signal indicating the phase of the transmission signal whereby there can be recognised from the received signal which is demodulated the phase applied in the transmission mode thereby to facilitate separation of signal from noise.

2. A circuit according to claim 1 wherein in operation the phase of the transmission signal and of the received signal is applied and extracted as a combination of digital in-phase and quadrature-phase modulations of the carrier.

3. A circuit according to claim 2 and wherein in operation the phase is determined by a combination of digital values which are a set of 2ⁿ values, where n is at least 1.

4. A circuit according to claim 1, claim 2 or claim 3 and wherein in operation the received signal provided to the demodulator means comprises a signal derived from the transmission signal after being incident on a surface of interest.

5. A circuit according to any one of the preceding claims and further comprising a digital signal processor (145) coupled to the demodulator means which in operation receives from the demodulator means the digital signals recovered by the demodulator means from the received signal.

6. A circuit according to claim 5 and wherein the digital signal processor is operable to apply a recognition algorithm to the digital signals to indicate that the received signal is derived from the transmission signal.

7. A circuit according to claim 6 and wherein the recognition algorithm applied by the digital signal processor provides an authentication that the received signal has been due to the transmission signal being incident on a surface of interest.

8. A circuit according to any one of the preceding claims wherein the demodulator means operates in a direct or homodyne mode using the transmission signal as its local oscillator signal.

9. A circuit according to any one of claims 1 to 7 and wherein the demodulator means operates in a heterodyne mode and the circuit further comprising a mixer means (136) coupled to receive the received signal and coupled to receive a signal representative of the transmission signal and to provide an output signal which is deliverable to the demodulator means.

10. A circuit according to claim 9, and further comprising a frequency divider (128) to which an output from the modulator means is applied, wherein the signal representative of the transmission signal is frequency divided from that signal.

11. A circuit according to claim 10, wherein the signal representative of the carrier transmission signal has a frequency which is substantially half that of the carrier transmission signal.

12. A radio transceiver (100) incorporating the circuit according to any one of the preceding claims.

13. A transceiver according to claim 12 and which further comprises a pulse generator (118) for transmitting the transmission signal as one or more pulses according to a predefined pulse characteristic.

14. A transceiver according to claim 12 or claim 13 and further comprising an antenna (124) and a switch (122) which is operable to couple the antenna to a transmit circuit including the modulator means (114) during the transmission mode and to couple the antenna to a receive circuit including the demodulator means (126) during the reception mode.

15. A method of inspecting or authenticating a surface of interest which comprises irradiating the surface with a radio signal which is produced from the transmission signal produced by the transceiver according to any one of claims 12 to 14 and analysing a signal returned from the surface as the received signal received by the transceiver.
